(19) Europäisches Patentamt
European Patent Office
Office européen des brevets

(11) Veröffentlichungsnummer: **0 193 022**
**B1**

(12) # EUROPÄISCHE PATENTSCHRIFT

(45) Veröffentlichungstag der Patentschrift: **01.06.88**

(51) Int. Cl.⁴: **C 09 B 67/22**, C 09 D 11/02 // C09B67/18

(21) Anmeldenummer: **86101723.4**

(22) Anmeldetag: **11.02.86**

(54) **Mischungen aus Disazopigmenten und löslichen Farbstoffen.**

(30) Priorität: **23.02.85 DE 3506474**

(43) Veröffentlichungstag der Anmeldung: **03.09.86 Patentblatt 86/36**

(45) Bekanntmachung des Hinweises auf die Patenterteilung: **01.06.88 Patentblatt 88/22**

(84) Benannte Vertragsstaaten: **CH DE FR GB LI**

(56) Entgegenhaltungen:
**EP - A - 0 057 880**
**DE - A - 2 135 468**
**DE - A - 3 109 579**
**FR - A - 1 538 270**
**FR - A - 2 084 545**
**FR - A - 2 091 301**
**US - A - 3 532 520**

(73) Patentinhaber: **BAYER AG, Konzernverwaltung RP Patentabteilung, D-5090 Leverkusen 1 Bayerwerk (DE)**

(72) Erfinder: **Paulat, Volker, Dr., Menzelweg 1, D-4019 Monheim (DE)**
Erfinder: **Wolf, Karlheinz, Dr., Paul-Klee -Strasse 77, D-5090 Leverkusen (DE)**
Erfinder: **Haus, Artur, Dr., Zum Eschental 8, D-5063 Overath (DE)**
Erfinder: **Brandt, Horst, Dr., Antoniusstrasse 4, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 193 022 B1

ACTORUM AG

**Beschreibung**

Aus der DE-A-3 109 579 sind Mischungen aus einem aminbehandelten Disazopigment auf 3,3'-Dichlorbenzidin-Basis und zwei weiteren Disazopigmenten auf 3,3'-Dichlorbenzidin-Basis bekannt. Die FR-A-2 091 301 und die DE-A-2 135 468 beschreiben Mischungen aus Azopigmenten und wasserlöslichen Farbstoffen.

Die Erfindung betrifft Mischungen aus aminbehandelten Disazopigmenten der Formel

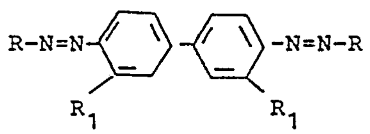

(I)

in der

$R_1$ Chlor, Methyl oder Methoxy und

R den Rest einer Kupplungskomponente der Acetessigsäureanilid-Reihe bezeichnen,

und löslichen Farbstoffen, die bei 20° C zu 1 g bis 400 g in 1 l Toluol löslich sind, sowie die kombinierte Anwendung von aminbehandelten Disazopigmenten der Formel I und den genannten löslichen Farbstoffen beim Tiefdruck, insbesondere beim Toluoltiefdruck.

Bevorzugt eingesetzt werden Disazopigmente der Formel I, in der R für

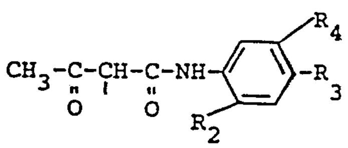

steht, wobei

$R_2$, $R_3$, $R_4$ Wasserstoff, $C_1$-$C_4$-Alkyl, $C_1$-$C_4$-Alkoxy und Halogen, insbesondere Chlor, bezeichnen.

$R_2$ bedeutet vorzugsweise H, $-CH_3$, $-OCH_3$;

$R_3$ bedeutet vorzugsweise H, $-CH_3$, Cl und

$R_4$ bedeutet vorzugsweise H und $-OCH_3$.

Besonders wichtig ist aminbehandeltes C.I. Pigment Yellow 12 (C.I. 21090).

Die Amine für die Aminbehandlung können beispielsweise folgenden Verbindungsklassen entstammen:

A) $R_2'-NH_2$

wobei

$R_2'$ einen aliphatischen Kohlenwasserstoffrest mit 6-24 C-Atomen, vorzugsweise einen $C_{10}$-$C_{20}$-Alkylrest bezeichnet. Beispielhaft seien genannt: Laurylamin, Stearylamin, Talgamin, Kokosamin.

B) $R_3'-NH-R_4'-NH_2$

wobei

$R_3'$ einen aliphatischen Kohlenwasserstoffrest mit 6-24 C-Atomen, insbesondere einen $C_{10}$-$C_{20}$-Alkylrest und

$R_4'$ eine Alkylengruppe mit 1-6 C-Atomen bezeichnen. Beispielhaft seien genannt: N-Stearyltrimethylendiamin, N-Talgtrimethylendiamin, N-Kokostrimethylendiamin.

C) $R_5-NH-R_6$

wobei

$R_5$ einen 5- oder 6-gliedrigen, gegebenenfalls substituierten cycloaliphatischen Rest und

$R_6$ Wasserstoff, einen 5- oder 6-gliedrigen, gegebenenfalls substituierten cycloaliphatischen Rest oder einen gegebenenfalls durch eine $NH_2$-Gruppe substituierten $C_1$-$C_6$-, vorzugsweise $C_2$-$C_4$-Alkylrest bezeichnet. Beispielhaft seien genannt: Cyclohexylamin, N-Cyclohexylpropylendiamin-1,3 und N-Cyclohexyltrimethylendiamin.

D) $H_2N-R_7-NH_2$

wobei

$R_7$ ein aliphatischer Kohlenwasserstoffrest mit 6-30 C-Atomen ist.

E) $H_2N(C_nH_{2n}-NH)_m-H$

wobei

n für 1-6 und

m für 2-8 stehen.

F) Organische Verbindungen mit mindestens drei an aliphatisch gebundenen Kohlenstoffatomen befindlichen primären Aminogruppen oder organische Verbindungen mit mindestens drei Hydrazinogruppen.

G) Harzamine wie Abietylamin, N-Abietyltrimethylendiamin und Dehydroabietylamin.

Es können auch Gemische der genannten Amine eingesetzt werden. Beispielhaft seien genannt: Mischungen aus Aminen der Typen A), D) und E) sowie Mischungen aus Aminen der Typen A) und F).

Bevorzugt eingesetzt werden die unter C) genannten Amine, insbesondere N-Cyclohexylpropylendiamin sowie die unter F) genannte Amine, insbesondere in Kombination mit Aminen des Typs A).

Besonders wichtig ist mit N-Cyclohexylpropylendiamin-1,3 behandeltes C.I. Pigment Yellow 12 (C.I. 21090).

Die Amin-Pigmentpräparate können weiterhin Alkylpolyethylenoxyamine, Aminoxide oder Phosphinoxide enthalten.

Die einsetzbaren Aminpigmentpräparate enthalten vorzugsweise 95-30 Gew.-%, besonders bevorzugt 60-90 Gew.-% Pigment oder Pigmentgemisch und 5-70 Gew.-%, besonders bevorzugt 40-10 Gew.-% Amin oder Amingemisch, wobei die Summe der Gewichtsprozente der beiden Bestandteile 100 ist sowie gegebenenfalls Zusatzstoffe.

Solche Zusatzstoffe sind z.B. anionische, nichtionogene oder kationische Tenside wie Schwefelsäureester von Anlagerungsprodukten von Ethylenoxid an langkettige Alkohole oder Alkylphenole, Anlagerungsprodukte von Ethylenoxid an Alkohole, Amine oder Fettsäuren, Laurylbenzyldimethylammoniumchlorid, N-Laurylmethylbenzimidazolchlorhydrat, Dodecylbenzyldimethylammoniumchlorid.

Weitere Zusatzstoffe speziell für Drucktinten sind z.B. anorganische Füllstoffe wie Schlämmkreide, Kaolin, Bariumsulfat oder Talk.

Geeignete Amine sind beispielsweise auch aus C. Patton (Hrg.), Pigment Handbook, Vol. III (1973), S. 162-162 bekannt. Erfindungsgemäss einsetzbare Amin-Pigmentpräparate sind beispielsweise auch aus GB-PS 1 080 115, FR-PS 1 491 740, CH-PS 459 426, FR-PS 1 538 270, US-PS 3 120 508, DE-OS 3 113 882, DE-OS 1 469 782, EP 57 880, DE-OS 2 121 673 und DE-OS 1 592 872 bekannt.

Die löslichen Farbstoffe können den verschiedensten Farbstoffklassen angehören. Beispielsweise seien gelbe bis rote Dispersionsfarbstoffe gemäss Colour Index, III. Auflage (1971), Vol. 2, S. 2479-2741, gelbe bis rote Solvent Farbstoffe gemäss Colour Index, III. Auflage (1971), Vol. 3, S. 3563-3647 und gelbe bis rote basische Farbstoffe gemäss Colour Index, III. Auflage (1971), Vol. 1, S. 1607-1688 genannt.

Bei Farbmittelmischungen, die ein aminbehandeltes Pigment der Formel (I) und insbesondere aminbehandeltes C.I. Pigment Yellow 12 (C.I. 21090) enthalten, können beispielsweise folgende lösliche Farbstoffe eingesetzt werden:

Dispersionsfarbstoffe:

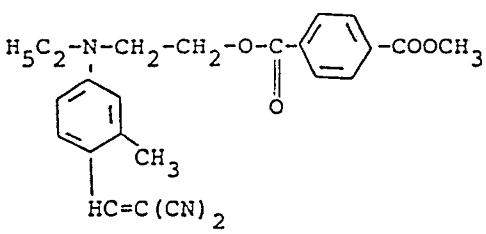

Gelb

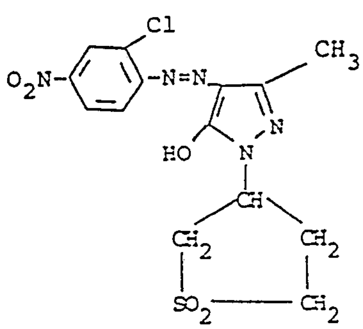

Gelb

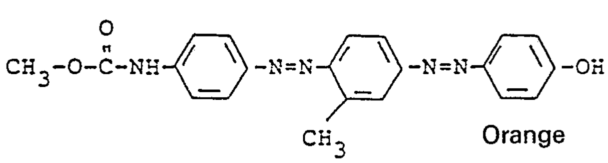

Orange

| | |
|---|---|
| C.I. Disperse Yellow 54 | (C.I. 47020) |
| C.I. Disperse Yellow 60 | (C.I. 12712) |
| C.I. Disperse Orange 29 | (C.I. 26077) |
| C.I. Disperse Red 60 | (C.I. 60756) |

Besonders bevorzugte Dispersionsfarbstoffe sind die Farbstoffe der Formeln

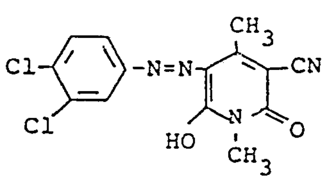

und

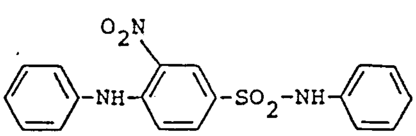

Die in die erfindungsgemässen Mischungen eingesetzten Dispersionsfarbstoffe sollten vorzugsweise einen Gehalt an Tensiden <5 Gew.-% haben oder besonders bevorzugt frei von Tensiden sein.

Solvent Farbstoffe:

| | |
|---|---|
| C.I. Solvent Yellow 29 | (C.I. 21230) |
| C.I. Solvent Yellow 16 | (C.I. 12700) |
| C.I. Solvent Yellow 14 | (C.I. 12055) |

Basische Farbstoffe:

Die basischen Farbstoffe wurden als Salze mit z.B. $Cl^{\ominus}$, $SO_4^{2-}$ oder $CH_3OSO_3^{\ominus}$, bevorzugt aber als Farbstoffbase oder in der nicht quaternierten neutralen Form eingesetzt. Es kommen z.B.

C.I. Basic Yellow 28 (C.I. 48054) oder

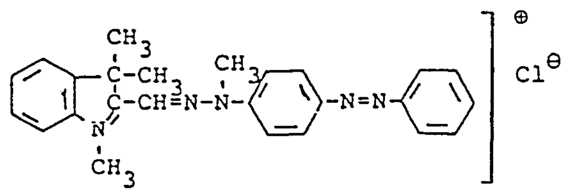

oder die Verbindungen

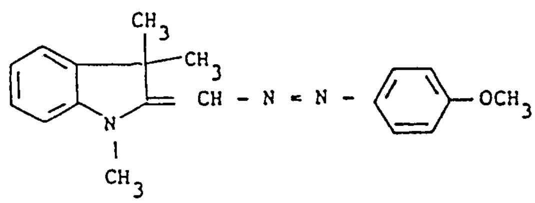

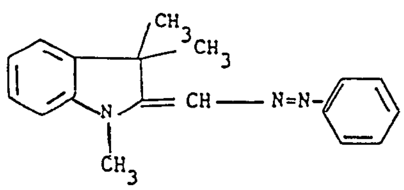

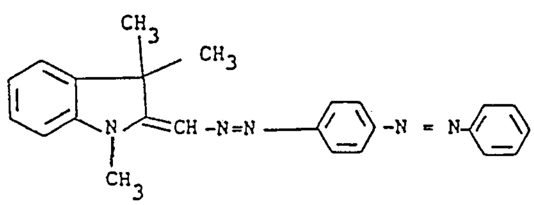

in Frage.

Die neuen Farbmittelmischungen enthalten das Pigment oder Pigmentgemisch und den löslichen Farbstoff oder ein Gemisch löslicher Farbstoffe im Gewichtsverhältnis 1:2 bis 1000:1, vorzugsweise 1:1 bis 100:1.

Beim Einsatz von Dispersionsfarbstoffen beträgt das Gewichtsverhältnis Pigment oder Pigmentgemisch zu Dispersionsfarbstoff oder -gemisch besonders bevorzugt 2:1 bis 10:1, ganz besonders bevorzugt 2:1 bis 4:1.

Zur Herstellung der neuen Farbstoffmischungen werden die löslichen Farbstoffe dem Pigmentpresskuchen oder dem trockenen Pigment, gegebenenfalls vor, während oder nach der Aminbehandlung untergemischt.

Die neuen Farbmittelmischungen finden vorteilhaft Verwendung zur Herstellung von Tiefdruckfarben, insbesondere zur Herstellung von Tiefdruckfarben auf Benzin- und insbesondere Toluolbasis. Dazu werden die Farbmittelmischungen in üblicher Weise in die Druckfarbenansätze eingearbeitet. Das aminbehandelte Disazopigment oder -pigmentgemisch und der lösliche Farbstoff oder ein Gemisch löslicher Farbstoffe können auch getrennt voneinander in den Druckfarbenansatz eingearbeitet werden.

Es ist im hohen Masse überraschend, dass Farbstoffe, die bei 20° C zu 1 g bis 400 g in 1 l Toluol löslich sind, als Zusatzstoffe für den Toluoltiefdruck eingesetzt werden können, ohne dass sie die Eigenschaften der Drucke wie z.B. das Durchschlagen auf dünnem oder saugfähigem Papier verschlechtern, ja sie zum Teil sogar verbessern, dass sie darüberhinaus eine höhere Farbstärke als Pigmente entwickeln und dass die Eigenschaften der Druckfarben aus aminbelegten Pigmenten, wie hohe Lasur, hervorragende Fliessfähigkeit nicht verschlechtert werden.

Gegenüber den aminbehandelten Pigmenten der Formel (I) zeichnen sich Mischungen aus aminbehandelten Pigmenten der Formel (I) und den genannten löslichen Farbstoffen beim Einsatz im Toluoltiefdruck dadurch aus, dass sich beliebige rotstichige Farbtöne einstellen lassen.

Es ist ausserdem überraschend, dass die Eigenschaften der aminbehandelten Pigmente wie hohe Farbstärke, hohe Lasur, hervorragende Fliessfähigkeit durch den Zusatz der löslichen Farbstoffe nicht verschlechtert werden.

*Beispiel 1:*

80 g eines aminbelegten Pigments, hergestellt gemäss der DE-AS 1 592 872 durch gemeinsame Trocknung von C.I. Pigment Yellow 12 (C.I. 21090) (Presskuchen) und 20% N-Cyclohexylpropylendiamin-1,3 wurden mit 20 g des Dispersionsfarbstoffs der Formel

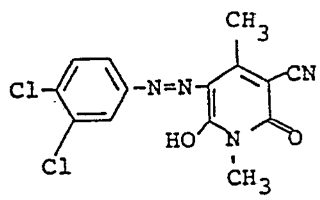

(II)

gemahlen und gemischt. Man erhält eine gelbe Pigmentpräparation.

Zur Herstellung einer Toluol-Tiefdruckfarbe werden 6 g dieser Pigmentpräparation mit 150 g Stahlkugeln (Ø 2 mm), 45 g eines handelsüblichen Kalkresinats (® Erkazit 899) (50%ig in Toluol) oder eines anderen handelsüblichen Toluol-Tiefdruckfirnisses und 24 g Toluol 30 Min. auf einem Red-Devil dispergiert und mit Toluol auf Druckviskosität eingestellt.

Die mit dieser Tiefdruckfarbe hergestellten Drucke sind lasierend, glänzend und farbstark und schlagen auf saugfähigen und dünnen Papieren weniger durch als entsprechend hergestellte Drucke mit dem aminbelegten Pigment alleine ohne den Dispersionsfarbstoff der Formel II.

*Beispiel 2:*

16 g eines aminbelegten Pigments, hergestellt gemäss der DE-AS 1 592 872 durch gemeinsame Trocknung von C.I. Pigment Yellow 12 (C.I. 21090) (Presskuchen) und 20% N-Cyclohexylpropylendiamin-1,3 werden zusammen mit 4 g des Dispersionsfarbstoffs der Formel II aus Beispiel 1, 150 g Glaskugeln (Ø 3 mm), 30 g eines handelsüblichen Zink-Kalkresinats (® Erkazit 899) (50%ig in Toluol) und 50 g Toluol 30 Min. auf einem Red-Devil dispergiert. 60 g des so hergestellten Dispergieransatzes werden mit 72 g eines handelsüblichen Kalkresinats (® Erkazit 899) (50%ig in Toluol) und 18 g Toluol verdünnt und mit einem DIN 3-Becher mit Toluol auf eine Viskosität von 23 Sek. eingestellt.

Die mit dieser Tiefdruckfarbe hergestellten Drucke zeigen die gleichen Ergebnisse wie die gemäss Beispiel 1 hergestellten.

*Beispiel 3:*

2067 g Presskuchen von C.I. Pigment Yellow 12 (C.I. 21090) (31%ig) werden mit 830 g Presskuchen des Dispersionsfarbstoffs der Formel II aus Beispiel 1 (24%ig) und 160 g N-Cyclohexylpropylendiamin-1,3 verrührt, in einem Schaufeltrockner getrocknet und gemahlen. Man erhält eine gelbe Pigmentpräparation mit den gleichen Eigenschaften wie die gemäss Beispiel 1 hergestellte.

*Beispiel 4:*

70 g eines aminbelegten Pigments, hergestellt gemäss der DE-AS 1 592 872 durch gemeinsame Trocknung von C.I. Pigment Yellow 12 (C.I. 21090) (Presskuchen) und 20% N-Cyclohexylpropylendiamin-1,3 werden mit 30 g des Dispersionsfarbstoffs der Formel II aus Beispiel 1 gemahlen und gemischt. Man erhält eine gelbe Pigmentpräparation. Die damit hergestellten Tiefdruckfarben auf Toluolbasis ergeben lasierende glänzende, farbstarke Drucke, die auf saugfähigen oder dünnen Papieren nicht durchschlagen.

*Beispiel 5:*

97 g eines aminbelegten Pigments, hergestellt gemäss der DE-AS 1 592 872 durch gemeinsame Trocknung von C.I. Pigment Yellow 12 (C.I. 21090) (Presskuchen) und 20% N-Cyclohexylpropylendiamin-1,3 werden mit 3 g des Farbstoffs der Formel

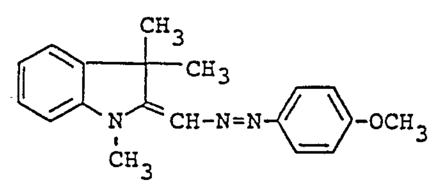

(III)

gemahlen und gemischt.

Man erhält eine rotstichige gelbe Pigmentpräparation. Die damit hergestellten Tiefdruckfarben auf Toluolbasis ergeben lasierende, glänzende, farbstarke, rotstichige Drucke, die auf saugfähigen oder dünnen Papieren nicht durchschlagen.

*Beispiel 6:*

98 g eines aminbelegten Pigments, hergestellt gemäss der DE-AS 1 592 872 durch gemeinsame Trocknung von C.I. Pigment Yellow 12 (C.I. 21090) (Presskuchen) und 20% N-Cyclohexylpropylendiamin-1,3 werden mit 2 g C.I. Solvent Yellow 14 gemeinsam gemäss Beispiel 1 dispergiert. Man erhält eine rotstichige gelbe Toluol-Tiefdruckfarbe. Die mit dieser Farbe hergestellten Drucke sind glänzend, farbstark und rotstichig und schlagen auf saugfähigen oder dünnen Papieren nicht durch.

*Beispiel 7:*

80 g eines aminbelegten Pigments, hergestellt gemäss der DE-AS 1 592 872 durch gemeinsame Trocknung von C.I. Pigment Yellow 12 (C.I. 21090) (Presskuchen) und 40% N-Cyclohexylpropylendiamin-1,3 werden mit 20 g des Dispersionsfarbstoffs der Formel II aus Beispiel 1 gemahlen und gemischt. Man erhält eine gelbe Pigmentpräparation. Die daraus hergestellte Tiefdruckfarbe ergibt farbstarke, glänzende Drucke, die auf saugfähigen und dünnen Papieren nicht durchschlagen.

*Beispiel 8:*

50 g eines aminbelegten Pigments, hergestellt gemäss der DE-AS 1 592 872 durch gemeinsame Trocknung von C.I. Pigment Yellow 12 (C.I. 21090) (Presskuchen) und 8% N-Cyclohexylpropylendiamin-1,3 werden mit 50 g des Farbstoffs der Formel

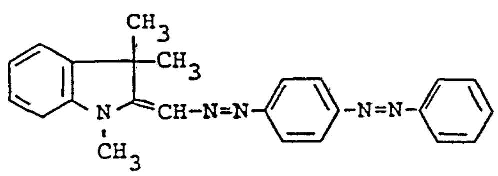

(IV)

gemahlen und gemischt.

Man erhält eine rötliche Pigmentpräparation. Die daraus hergestellte Druckfarbe ergibt rote, glänzende, farbstarke, nicht durchschlagende Drucke.

*Beispiel 9:*

50 g eines aminbelegten Pigments, hergestellt gemäss der DE-AS 1 592 872 durch gemeinsame Trocknung von C.I. Pigment Yellow 12 (C.I. 21090) (Presskuchen) und 8% N-Cyclohexylpropylendiamin-1,3 werden mit 50 g des basischen Farbstoffs der Formel IV aus Beispiel 8 wie in Beispiel 1 beschrieben gemeinsam dispergiert.

Man erhält Drucke mit den gleichen Eigenschaften wie in Beispiel 8 beschrieben.

*Beispiel 10:*

Man verfährt wie in Beispiel 1, setzt jedoch ein Pigment ein, das wie folgt hergestellt wird:

Eine Mischung aus 6 g Oleylamin, 30 g Talgfett-$NH-CH_2-CH_2-CH_2-NH_2$, 9 g der Verbindung der Formel

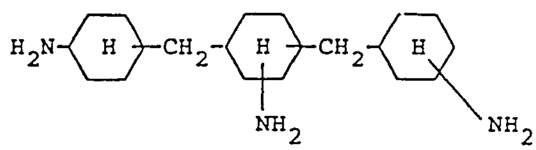

und 150 ml Wasser wird unter Rühren und Erwärmen homogenisiert und anschliessend mit 100 g C.I. Pigment Yellow 12 (C.I. 21090) am Schnellrührer verrührt. Die Mischung wird in einem Rotationsverdampfer im Vakuum getrocknet. Man erhält eine Pigmentpräparation mit den in Beispiel 1 genannten Eigenschaften.

*Beispiel 11:*

Man verfährt wie in Beispiel 4. Eingesetzt wird ein Pigment wie in Beispiel 10 beschrieben. Man erhält eine Pigmentpräparation mit den in Beispiel 4 genannten Eigenschaften.

*Beispiel 12:*

Man verfährt wie in Beispiel 5. Eingesetzt wird ein Pigment wie in Beispiel 10 beschrieben. Man erhält eine Pigmentpräparation mit den in Beispiel 5 genannten Eigenschaften.

*Beispiel 13:*

Man verfährt wie in Beispiel 6. Eingesetzt wird ein Pigment wie in Beispiel 10 beschrieben. Man erhält eine Pigmentpräparation mit den in Beispiel 6 beschriebenen Eigenschaften.

*Beispiel 14:*

Man verfährt wie in Beispiel 4. Eingesetzt wird ein Pigment, hergestellt nach EP-A-00 57 880, Beispiel 1. Man erhält eine Pigmentpräparation mit den in Beispiel 4 genannten Eigenschaften.

*Beispiel 15:*

Man verfährt wie in Beispiel 5. Eingesetzt wird ein Pigment wie in Beispiel 14. Man erhält eine Pigmentpräparation mit den in Beispiel 5 beschriebenen Eigenschaften.

*Beispiel 16:*

Man verfährt wie in Beispiel 6. Eingesetzt wird ein Pigment wie in Beispiel 14. Man erhält eine Pigmentpräparation mit den in Beispiel 6 beschriebenen Eigenschaften.

**Patentansprüche**

1. Mischungen aus aminbehandelten Disazopigmenten der Formel

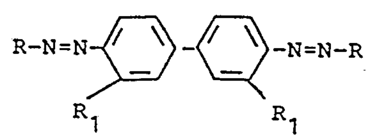

(I)

in der

$R_1$ Chlor, Methyl oder Methoxy und

R den Rest einer Kupplungskomponente der Acetessigsäureanilid-Reihe bezeichnen

und Farbstoffen, die bei 20° C zu 1 g bis 400 g in 1 l Toluol löslich sind.

2. Mischungen gemäss Anspruch 1, die Disazopigmente der Formel (I) enthalten, wobei R für

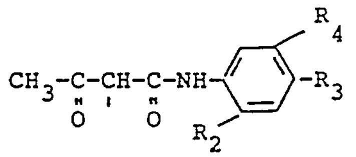

steht

und $R_2$, $R_3$, $R_4$ Wasserstoff, $C_1$-$C_4$-Alkyl, $C_1$-$C_4$-Alkoxy und Halogen bezeichnen.

3. Mischungen gemäss Anspruch 1, die als Disazopigment C.I. Pigment Yellow 12 (C.I. 21090) enthalten.

4. Mischungen gemäss den Ansprüchen 1-3, die als löslichen Farbstoff einen Dispersionsfarbstoff, einen Solvent-Farbstoff und/oder einen basischen Farbstoff enthalten.

5. Mischungen gemäss den Ansprüchen 1-4, enthaltend das Disazopigment oder -gemisch und den löslichen Farbstoff oder ein Gemisch löslicher Farbstoffe im Gewichtsverhältnis 1:2 bis 1000:1, vorzugsweise 1:1 bis 100:1.

6. Mischungen gemäss den Ansprüchen 1-5, enthaltend mit N-Cyclohexylpropylendiamin-1,3 behandeltes C.I. Pigment Yellow 12 (C.I. 21090).

7. Verwendung von Mischungen gemäss den Ansprüchen 1-6 bei der Herstellung von Tiefdruckfarben.

## Claims

1. Mixtures of amine-treated disazo pigments of the formula

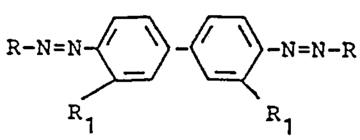

(I)

in which

$R_1$ denotes chlorine, methyl or methoxy and

R denotes the radical of a coupling component of the acetoacetanilide series,

and dyestuffs which are soluble to the extent of 1 g to 400 g in 1 l of toluene at 20° C.

2. Mixtures according to Claim 1, which contain disazo pigments of the formula I in which R represents

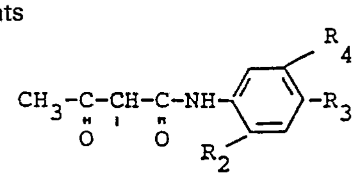

and

$R_2$, $R_3$ and $R_4$ denote hydrogen, $C_1$-$C_4$-alkyl, $C_1$-$C_4$-alkoxy and halogen.

3. Mixtures according to Claim 1, which contain, as the disazo pigment, C.I. Pigment Yellow 12 (C.I. 21090).

4. Mixtures according to Claims 1-3, which contain, as the soluble dyestuff, a disperse dyestuff, a solvent dyestuff and/or a basic dyestuff.

5. Mixtures according to Claims 1-4, containing the disazo pigment or disazo mixture and the soluble dyestuff or a mixture of soluble dyestuffs in a ratio by weight of 1:2 to 1000:1, preferably 1:1 to 100:1.

6. Mixtures according to Claims 1-5, containing C.I. Pigment Yellow 12 (C.I. 21090) which has been treated with N-cyclohexyl-1,3-propylenediamine.

7. The use of mixtures according to Claims 1-6 in the preparation of gravure printing inks.

## Revendications

1. Mélanges de pigments disazoïques traités avec une amine, de formule

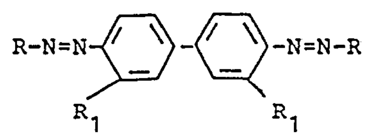

(I)

dans laquelle

$R_1$ représente le chlore, un groupe méthyle ou méthoxy et

R est le reste d'un copulant de la série de l'anilide d'acide acétylacétique,

et de colorants qui sont solubles à 20° C, en proportion de 1 à 400 g dans 1 litre de toluène.

2. Mélanges suivant la revendication 1, qui contiennent des pigments disazoïques de formule (I), dans laquelle

R représente un groupe de formule

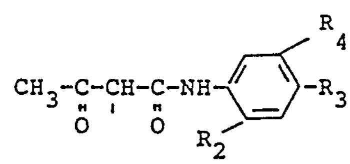

et $R_2$, $R_3$ et $R_4$ représentent l'hydrogène, un groupe alkyle en $C_1$ à $C_4$, un groupe alkoxy en $C_1$ à $C_4$ et un halogène.

3. Mélanges suivant la revendication 1, qui contiennent comme pigments disazoïques le pigment C.I. Pigment Yellow 12 (C.I. 21090).

4. Mélanges suivant les revendications 1 à 3, qui contiennent comme colorant soluble un colorant dispersé, un colorant du type solvant et/ou un colorant basique.

5. Mélanges suivant les revendications 1 à 4, contenant le pigment disazoïque ou le mélange de pigments disazoïques et le colorant soluble ou un mélange de colorants solubles dans le rapport en poids de 1:2 à 1000:1, de préférence de 1:1 à 100:1.

6. Mélanges suivant les revendications 1 à 5, contenant le pigment C.I. Pigment Yellow 12 (C.I. 21090) traité à la N-cyclohexylpropylènediamine-1,3.

7. Utilisation de mélanges suivant les revendications 1 à 6 dans la préparation d'encres d'impression hélio.